# EUROPEAN PATENT APPLICATION

(11) **EP 4 040 648 A1**
(43) Date of publication of application: **10.08.2022**
(21) Application number: 22154933.0
(22) Date of filing: 03.02.2022
(51) Int. Cl.: H02K 3/52, H02K 3/32, H02K 3/34, H02K 15/12

(54) **STATOR OF ELECTRIC MACHINE**

(30) Priority: 04.02.2021 IT 202100002522
(71) Applicant: SPAL Automotive S.r.l., 42015 Correggio (Reggio Emilia) (IT)
(72) Inventor: DE FILIPPIS, Pietro, 17019 Varazze (Savona) (IT)
(74) Representative: Puggioli, Tommaso

(57) **Abstract**

A stator with concentrated windings comprises a ferromagnetic core having a central axis, an electrical insulation system disposed on the ferromagnetic core and a winding disposed on the insulation system to be mechanically locked thereto and electrically insulated from the ferromagnetic core (2); the ferromagnetic core (2) comprises a plurality of radial teeth (4a) without pole shoe and each tooth (4a) has a radial length, an axial depth and a width orthogonal to the radial length and axial depth; the ratio between the slot pitch and the width of the tooth (4a) is between 1.2 and 1.5, preferably between 1.3 and 1.4.

## Description

This invention relates to a stator for an electric motor, in particular a compact, concentrated winding stator for a permanent magnet brushless motor of the sealed type for automotive applications, for example, for driving pumps or fans of electric ventilators used for removing heat from radiating masses and the like.

Generally speaking, a prior art electric motor comprises a casing, housing a wound stator - that is, a stator comprising a ferromagnetic core with the windings placed on it -, rigidly connected to the casing, and a permanent magnet rotor rotatably connected to the casing.

An electronic module or electronic drive module, connected to the stator, is usually mounted in the casing to power the stator.

The casing is closed by a cap to form a sealed container from which connecting pins protrude to allow powering the electronic drive circuitry.

In prior art stators, the windings of each phase are made up of a multiplicity of copper wire coils, covered by an insulant, wound in several layers on individual pole pieces and connected in different series and/or parallel combinations for each phase.

The winding as a whole, which is traversed by electrical current, is insulated from the pole pieces, which are made of ferromagnetic material, by suitable insulators.

The electrical current flowing through the winding may be high and, on account of the Joule effect, produces heat which propagates to the entire winding and to adjacent parts of the electric machine.

The heat deteriorates the conductivity properties of the lead wire, resulting in higher resistance to the flow of current and causing high and often unacceptable energy dissipation.

This situation is particularly serious in rotary electric machines of the sealed type where the windings are sealed in the container, defined by casing and cap, where cooling air is not free to circulate.

An example of an electric motor structured to better eliminate the heat generated by the windings is described in document EP3506465, in the name of the present Applicant.

The casing of the electric machine of that prior document comprises a base wall, transverse to the axis of rotation of the machine and provided with an annular projection jutting towards the inside of the casing.

The outermost layer of the winding, furthest from the ferromagnetic core, is in a heat exchange relationship with the annular projection through an annular spacer which is interposed between the stator and the base wall of the casing.

The spacer is thermally conductive and electrically insulating and has a plurality of through holes.

A thermally conductive and electrically insulating paste is interposed between the coils and the spacer to fill any empty spaces, including the holes in the spacer in order to maximize and optimize heat exchange between the coils, the spacer and the motor casing.

Market demands, in particular in the automotive sector, require electric machines, especially sealed electric machines, which are much better performing in terms of efficiency and power output, under equal conditions of size.

A solution of the type described in document EP3506465 may not be sufficient to reach the expected performance, also on account of the inadequate elimination of the heat generated by the windings.

In this context, our intention is to propose a stator capable of overcoming at least some of the drawbacks of the prior art and of meeting the above mentioned need.

This invention has for an aim to provide a stator which, with a circular stator crown having the same volume, allows obtaining more power from the electric machine and more effective elimination of the heat generated in the windings, to meet the growing power requirements of automotive applications.

This aim is achieved by a stator comprising the technical features described in one or more of the accompanying claims. The dependent claims correspond to possible different embodiments of the invention. According to an aspect of it, this disclosure regards a stator with concentrated windings and compact ferromagnetic core intended for sealed electric motors or open internal rotor motors; these motors are usually cooled through the casing.

According to an aspect, the stator comprises a ferromagnetic core having a central axis.

According to an aspect, the ferromagnetic core is constructed from a plurality of superposed annular plates.

According to an aspect, the ferromagnetic core comprises a compact circular crown, that is, an uninterrupted, continuous crown, and a plurality of teeth which extend radially from the circular crown towards the central axis. The teeth and the crown form a compact, uninterrupted structure defined, for example, by superposing the annular plates.

Each tooth has a radial length, an axial depth and a width orthogonal to the radial length and axial depth.

According to an aspect, the teeth are without pole shoe and the ratio between the slot pitch and the width of the tooth is between 1.2 and 1.5. According to an aspect, the ratio between the slot pitch and the width of the tooth is between 1.3 and 1.4.

According to an aspect, at least one tooth of the plurality of teeth is rectangular in shape in its cross section orthogonal to the central axis. According to an aspect, the ratio between the width of the tooth and the axial depth of at least one tooth of the plurality of teeth is between 0.2 and 3.

According to an aspect, the ratio between the width of the tooth and the axial depth of at least one tooth of the plurality of teeth is between 0.7 and 1.5.

According to an aspect, the ratio between the width of the tooth and the axial depth of at least one tooth of the plurality of teeth is 1.

According to an aspect, all the teeth of the plurality of teeth are identical. According to an aspect, the stator comprises a winding that comprises a plurality of coils, each positioned on a respective tooth.

According to an aspect, the coils comprise a single layer.

According to an aspect, the coils comprise two or more layers.

According to an aspect, the winding coils are made with a wire of rectangular cross section of the type known as "ribbon wire".

According to an aspect, the winding coils are made from what is known as "self-bonding wire", which may also be circular in cross section. According to an aspect, the coils are "self-supporting": that is to say, they have a substantially tubular structure which may be placed over the corresponding stator tooth.

According to an aspect, the coil is three-phase and the coils of each phase are connected in series.

According to an aspect, the stator comprises an electrical insulation system.

The insulation system comprises a first portion and a second portion, disposed on opposite sides of the ferromagnetic core along the central axis.

The first portion comprises a plurality of first radial elements which, on each tooth, extend from the circular crown of the ferromagnetic core towards a central axis.

The second portion of the insulation system comprises a plurality of second radial elements which, on each tooth, extend from the circular crown of the ferromagnetic core towards a central axis.

According to an aspect, the insulation system is overmoulded on the ferromagnetic core.

According to an aspect, at each radial section, the insulation system has a preset height, measured along the central axis, independent of the height of the ferromagnetic core at the same radial section.

According to an aspect, at each radial section, at least the radial elements of one portion of the insulation system have a preset height, measured along the central axis, independent of the height of the ferromagnetic core at the same radial section.

According to an aspect, the first elements each comprise a base surface and at least one protrusion extending axially from the base surface. According to an aspect, the protrusion comprises an arm which extends radially for at least part of the length of the tooth.

According to an aspect, the protrusion comprises an arm which extends in parallel with the width of the tooth.

According to an aspect, the insulation system comprises, for each tooth, a first and a second flank connecting a first radial element to a corresponding second radial element, disposed on the side opposite to the first radial element with respect to the ferromagnetic core, to form an insulating tube.

According to an aspect, the insulation system, preferably a first portion of it, is provided with a groove, at each tooth, where the ferromagnetic core is uncovered.

According to an aspect, each coil comprises a face which is positioned on a respective first radial element of the insulation system.

This face is plastically deformed towards a base surface of the first radial element so that each coil is locked at least to a respective protrusion and is thus stationary relative to the insulation system.

Each coil is held tightly to the respective tooth, thanks to the tension created by the deformation.

According to an aspect, the insulation system is thermally conductive. According to an aspect, this disclosure relates to an electric motor comprising a casing having a base wall and a side wall; a stator mounted in the casing and connected thereto; a rotor mounted in the casing and rotatably connected thereto; a lid for closing the casing to define a sealed or open enclosure.

According to an aspect, the electric motor comprises a thermally conductive and electrically insulating spacer, interposed between the stator and the base wall of the casing.

According to an aspect, the spacer has a plurality of openings at the coils. The openings are substantially rectangular so that the face of the coil resting on the spacer can be placed in a heat exchange relationship with the base wall of the casing, for example, by means of a thermally conductive paste inserted in the corresponding opening.

In an embodiment, the openings are open on one side which is orthogonal to a radius and are thus in the form of recesses facing towards an outer or inner edge of the spacer.

According to an aspect, the stator of the motor is made according to one or more of the preceding aspects.

This disclosure also relates to a method for assembling a stator made according to one or more of the above aspects.

According to an aspect of the method, the coils are wound outside of the stator and then fitted onto teeth: that is to say, they are not wound directly onto the stator.

Generally speaking, coils that are wound outside of the stator are known as "self-supporting" coils and may comprise one or more layers, based on design requirements.

The stator according to one or more of the preceding aspects brings important advantages.

The geometry of the teeth allows making better use of the iron of the plates at equal cost and size.

By maximizing the flow sections, this geometry allows managing larger quantities of magnetic flux and, at the same time, also reduces the density of magnetic flux B, thus reducing the power dissipated in the iron.

Thanks to the size and shape of the teeth, which, besides, are without pole shoes, the wire area that can be placed in heat exchange relation with the motor casing is up to 50% larger, and even more, than that of prior art solutions, with the same constructional parameters of the stator, such as, for example, inside diameter, outside diameter and air gap diameter, which in turn means better efficiency in removing the heat generated in the windings.

Once the slot opening necessary for the passage of the coil has been defined, the teeth may have the largest width possible.

The adoption of compact, self-supporting coils, preferably single-layer and/or multilayer and/or ribbon type, allows minimizing the slot opening and maximizing tooth width.

The face of the coil confronting the casing is flat and large-sized thanks to the increased size of the tooth and allows the windings to be cooled more effectively since the conductivity of the thermal flow path from the coil to the casing is directly proportional to the larger heat exchange surface. The coil turns can be optimized for automotive applications which require motors that are relatively short or flat on account of the confined spaces inside the vehicles.

The geometry of the teeth, in this context, may allow the adoption of substantially square coil turns which is, theoretically, the solution with the shortest coil turn length under equal conditions of magnetic flux "concatenated" with its surface, thereby reducing coil turn resistance and thus improving the efficiency of the motor.

The use of relatively large cross section wires, such as 2 sq.mm by way of non-limiting example, reduces, and even cancels, the need to make windings with parallel connections, which are generally less efficient, on account of the recirculation currents, and more expensive, for example on account of the larger number of winding turns and solders.

A wire with a relatively large cross section can be extended to make the connections between the coils and the winding terminations.

The number of turns can be reduced, for example, by the same percentage by which the magnetic flux controllable by the teeth was increased as a result of increasing tooth width, where all the other machine parameters are the same.

Reducing the number of turns allows making single-layer coils, reducing the phase resistance, obtaining higher efficiency, reducing the demagnetizing effects, thanks to lower coil amperage, increasing the maximum torque/nominal torque ratio.

The different shape ratios obtainable using the ribbon wire make for higher flexibility in the construction of the stator, hence of the motor.

For example, it is possible to make motors of the same power for different supply voltages by changing only the shape ratios of the wire, with the same slot filling factor (copper volume), hence the same efficiency.

The adoption of self-supporting coils, in particular made outside the stator, allows constructing motors of the same power for different supply voltages by changing the number of turns, or layers, with the same slot filling factor (copper volume).

The overmoulded insulation system allows compensating for the thickness tolerances of the ferromagnetic core due to the sum of the common tolerances of the single plates, for example ±0.5 mm, favouring the adoption of coils which are wound on the outside of the rotor and which must be fitted to the ferromagnetic core.

The adoption of the overmoulded insulation system allows obtaining, for the assembly formed of the plate and the insulation, dimensions that are compatible with the coil production tolerances that may be of the order of hundredths.

The system for locking each coil to the respective tooth, preferably accomplished by shaping the insulation with a protrusion which at least partly delimits a cavity into which one face of the coil is deformed, preventing their moving relative to each other in use, which would be harmful in particular for the insulation between the coil turns when subjected to vibrations.

The locking system, in particular the tangential arm of the protrusion, prevents the coils from slipping off the teeth.

The adoption of an overmoulded insulation system eliminates the presence of air between the insulating element and the plates which would considerably diminish the capability of removing heat from the windings through the ferromagnetic core as far as the casing.

The insulation system overmoulded on the ferromagnetic core allows providing, for each tooth of the core, a centring system which allows aligning and positioning a tool for forming the coils and positioning them in the stator.

The centring system allows axial and angular alignment of the tool for fitting the coil to the tooth.

If the insulation system comprises tubes which can be placed over the tooth, each coil can be wound directly onto the respective tube and fitted to the corresponding tooth together therewith.

In an embodiment, once the stator comes into abutment against the base wall of the casing, the tube and the coil are locked to the tooth by the action of the coils themselves and the thermally conductive spacer ring.

In an embodiment, the tube is fitted to the tooth by a snap-on system, for example, comprising a protrusion on the tooth flank and a recess on the inside of the tube.

Further features and advantages of the foregoing, and additional aspects thereof, are more apparent in the indicative, hence non-limiting, description of several preferred but non-exclusive embodiments of a concentrated winding stator and an electric motor comprising such a stator.

The description is set out below with reference to the accompanying drawings which are provided solely for purposes of illustration without restricting the scope of the invention and in which:

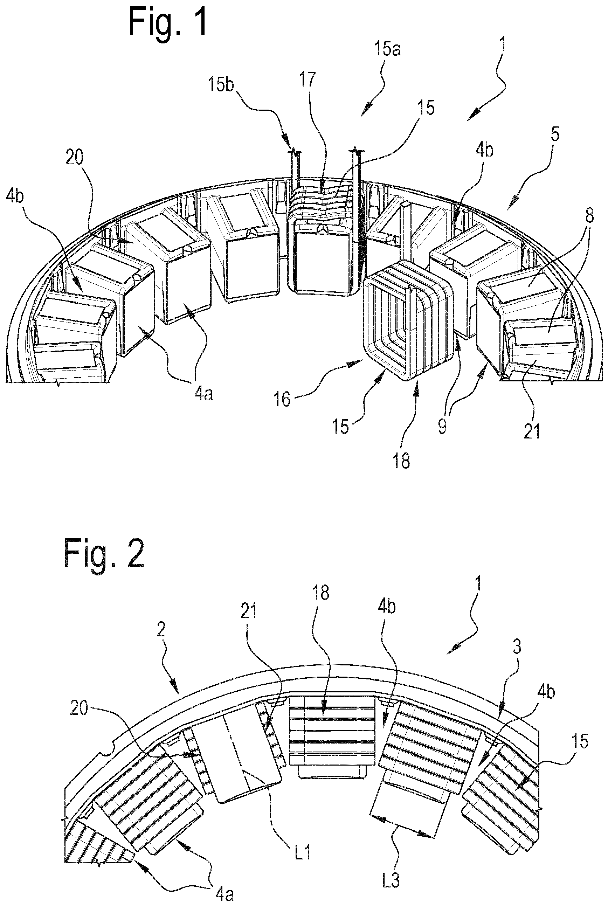

- Figure 1 illustrates a detail of a stator according to the disclosure in a schematic perspective view;
- Figure 2 illustrates a detail of a stator according to the disclosure in a schematic plan view;
- Figure 3 illustrates a detail of a stator according to the disclosure in a schematic perspective view;
- Figure 4 illustrates a detail of a stator according to the disclosure in a schematic perspective view;
- Figure 5 illustrates a detail of an electric motor according to the disclosure in a schematic cross sectional view;
- Figure 6 illustrates a detail of an electric motor according to the disclosure in a schematic perspective view;
- Figure 7 illustrates a detail of an electric motor according to the disclosure in a schematic perspective view;
- Figure 8 illustrates a detail of a stator according to the disclosure in a schematic plan view.

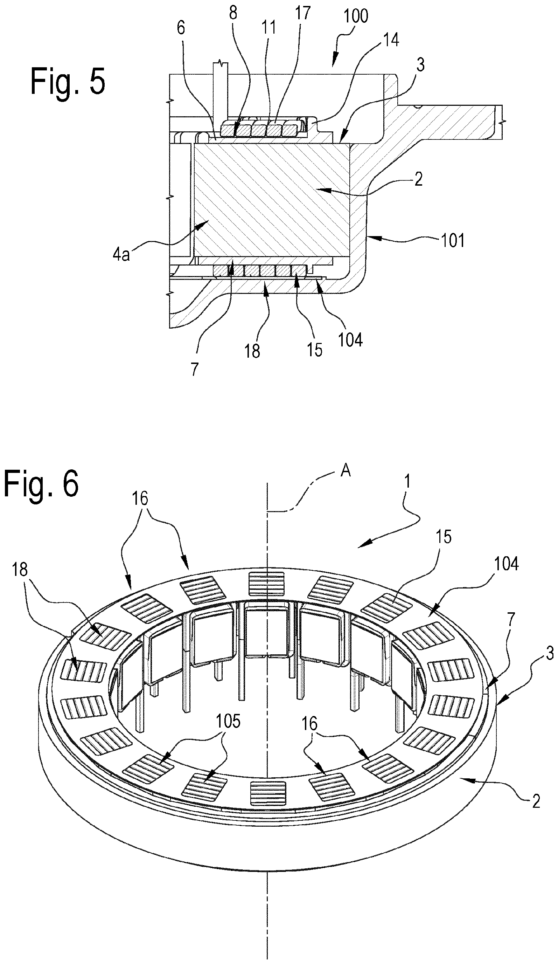

With reference to Figure 5, the numeral 100 denotes a permanent magnet brushless electric motor according to this disclosure.

The motor 100, having an axis of rotation, basically comprises a casing 101, a cap, not illustrated, for covering the casing 101, a stator, integral with the casing 101, a rotor and a drive circuit which are not illustrated and which are mounted in an enclosure delimited by the casing 101 and the cap.

In an embodiment, the enclosure is of the sealed type and the motor 100 is a sealed motor.

In an embodiment, the enclosure is provided, for example, with ventilation holes and the motor 100 is an open motor.

The motor 100 comprises a stator 1 according to this disclosure.

The stator 1 is a compact, concentrated winding stator.

The stator 1 comprises a ferromagnetic core 2, with a central axis A, preferably formed of a plurality of plates superposed along the axis A, not shown in the drawings.

The ferromagnetic core has an outer portion, having the shape of an annular crown 3, and a plurality of teeth 4a jutting radially from the crown 3 towards the axis A.

The teeth 4a are without pole shoe and delimit slots 4b.

The annular crown 3 and the teeth 4a form a compact, uninterrupted structure, in particular along the annular crown which extends uninterruptedly without breaks around the axis A.

Each tooth 4a has a radial length L1, an axial depth L2 and a width L3 orthogonal to the radial length L1 and axial depth L2.

In practice, the depth L2 corresponds to the length of the ferromagnetic core 2 measured along the axis A.

The ratio between the slot pitch, namely the distance between the centre lines or bisectors of two adjacent slots 4b, and the width L3 of the tooth is between 1.2 and 1.5.

In an embodiment, the ratio between the slot pitch and the width L3 of the tooth 4a is between 1.3 and 1.4.

In an embodiment, the ratio between the width L3 of the tooth and the axial depth L2 of each tooth 4a is between 0.2 and 3.

Preferably, the ratio between the width L3 of the tooth and the axial depth L2 of each tooth 4a is between 0.7 and 1.5.

In an embodiment, the ratio between the width L3 of the tooth and the axial depth L2 of each tooth 4a is 1.

In a preferred embodiment, the teeth 4a are identical.

Preferably, the teeth 4a are rectangular in shape in their cross section orthogonal to the central axis A.

At least in this embodiment, the stator 1 is preferably intended for what are known as "flat electric motors" normally used in the automotive engine cooling sector. In these applications, the ratio between the width L3 and the axial depth L2 of each tooth 4a is close to an optimum value equal to 1.

The stator 1 comprises an electrical insulation system 5, preferably thermally conductive, disposed on the ferromagnetic core 2 to insulate it from the electrical windings normally present.

The insulation system 5 comprises a first portion 6 and a second portion 7, disposed on opposite sides of the ferromagnetic core 2 along the central axis A.

The portion 6 comprises a plurality of radial elements 8 which, on each tooth 4a, extend from the annular crown 3 towards the central axis A.

The portion 7 comprises a plurality of radial elements 9 which, on each tooth 4a, extend from the annular crown 3 towards the central axis A.

In an embodiment, the insulation system 5 is overmoulded on the ferromagnetic core 2.

As illustrated by way of example, the insulation system 5 covers the ferromagnetic core 2 completely, at least at the teeth 4a.

The ferromagnetic core 2, together with the overmoulded insulation system 5, have, at each radial section, a predetermined total height H, measured along the central axis A.

At any one given section of the assembly formed of the ferromagnetic core 2 and the insulation system 5 overmoulded on the core 2, the height of the overmoulding, measured along the axis A, has one or more predetermined values independently of the height of the ferromagnetic core 2 alone at the same radial section.

That way, regardless of the height of the core 2, which may be influenced, even significantly, by the plate tolerances, the assembly formed of the core 2 and the insulation system has predetermined constant values.

In an embodiment, the portion 6 of the insulation system 5 has, at each radial section, a predetermined height H1, measured along the central axis A, independent of the height of the ferromagnetic core 2 alone.

In practice, during the step of overmoulding the insulation system 5, the height H1 of the portion 6 is kept constant and the height of the portion 7 is compensated accordingly so that the total height H of the insulation system 5 is also kept constant.

The insulation system 5 has a built-in winding locking system 10.

The locking system 10 is preferably provided in the portion 6 of the insulation system 5.

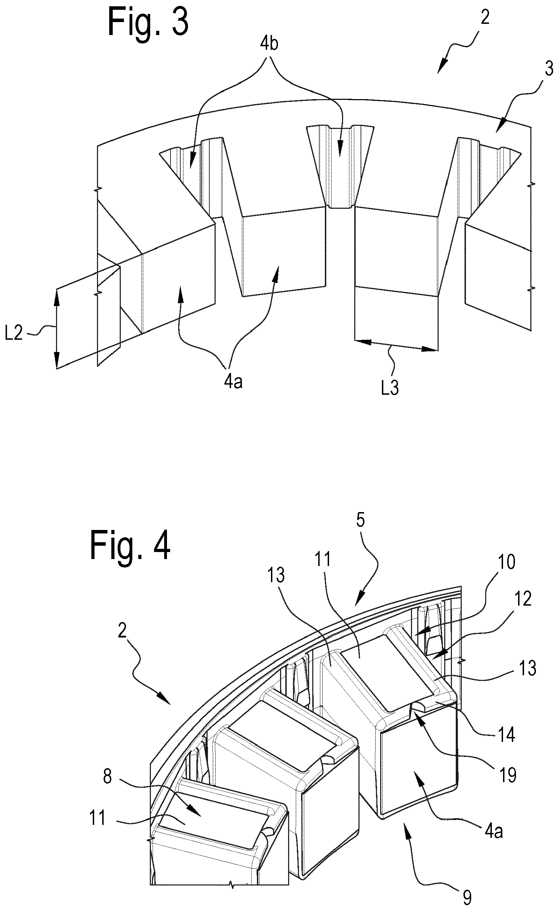

In an embodiment, illustrated by way of example in Figure 4, the elements 8 each comprise a base surface 11.

The elements 8 comprise a protrusion 12 jutting axially from the base surface 11.

The protrusion 12 at least partly surrounds the surface 11 and, in practice, delimits a space or recess.

In a preferred embodiment, the protrusion 12 comprises an arm 13 which extends radially for at least part of the length L1 of the tooth 4a.

In the example illustrated, the protrusion 12 comprises two parallel arms 13.

In a preferred embodiment, the protrusion 12 comprises an arm 14 which extends radially for at least part of the length L3 of the tooth 4a.

In the example illustrated, the arms 13 and 14 are uninterrupted. In a preferred embodiment, the protrusion 12 has the shape of an L.

The stator 1 comprises a plurality of phase wires 15 disposed on the ferromagnetic core 2, specifically on the radial elements 8, 9 of the insulation system 5 to be electrically insulated from the core 2.

The wires 15 are wound to define a plurality of coils 16, each placed on the corresponding tooth 4a; the set of coils 16 defines what is known as the stator winding.

Preferably, the coils 16 are self-supporting.

Each coil 16 is formed of a predetermined total number N of turns.

The number of turns for each coil 16 and the cross section of the wires 15 are determined in substantially known manner at the motor design stage, in particular as a function of the expected performance of the motor.

The radial and axial dimensions of the stator teeth and the diameter of the wires, for example, contribute to determining the number of turns per coil. Each coil 16 has two end faces 17, 18 aligned with each other along a direction parallel to the axis A.

The end faces 17, 18 each lie in a plane perpendicular to the axis A.

In an embodiment, the wire 15 of each coil 16 can be extended in such a way as to have elongated ends 15a, 15b that can be used to make the terminations of the winding and/or the connections between the coils 16.

In a preferred embodiment, the coils 16 are made in a single layer.

As illustrated, the coils 16 comprise a single conductive layer 15.

In a preferred embodiment, the coils are made from a wire 15 having a substantially rectangular or square cross section - that is to say, a wire commonly known as "ribbon wire".

Advantageously, the use of ribbon wire to make single-layer coils allows making the most of the area available in the slot by changing the shape ratio of the wire with the same slot filling factor, even to make different versions of the same motor for different supply voltages.

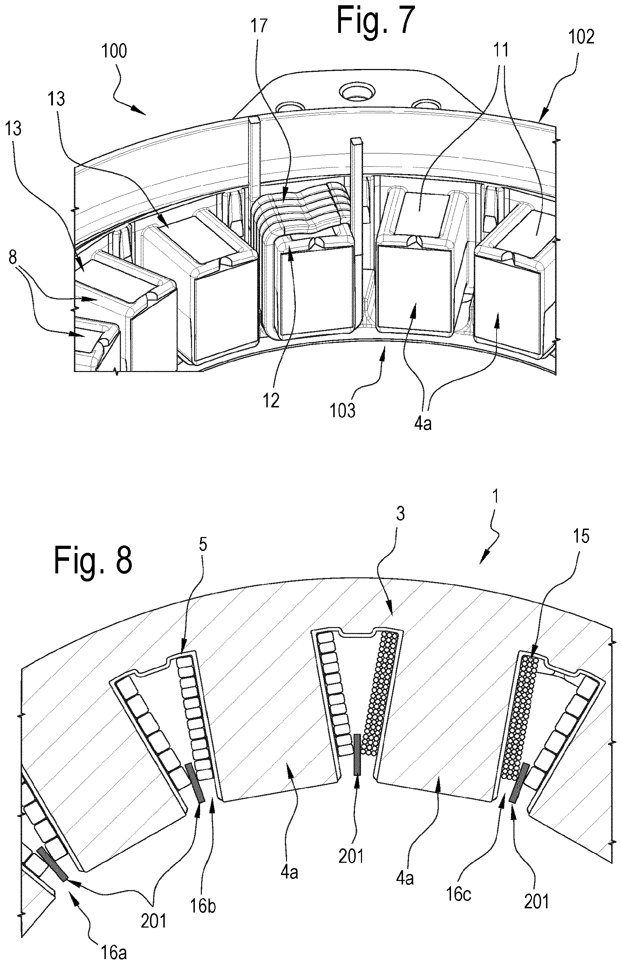

Figure 8 shows, for example, a coil 16a and a coil 16b which has twice as many turns as the coil 16a for the same coil size.

For example, the coil 16a is a coil of a 12 Volt stator and the coil 16b is a coil of a 24 Volt motor obtained, in particular, by keeping the single-layer winding and the coils connected in series.

In an embodiment, the coils are made with two or more superposed wire layers. In the case of coils wound in two or more layers, the wire 15 preferably has a circular cross section.

The wire with circular cross section allows the surface facing the casing to be kept wide and flat.

Figure 8 shows a compact, self supporting multilayer coil 16c.

A multilayer coil 16c is used typically in higher voltage motors, for example, 400 or 800 Volts.

In an embodiment, the multilayer coil 16c is preferably made with self-bonding wire - that is to say, wire provided with a self-bonding covering.

In an embodiment, the compact, self supporting coil 16c is made with technologies that allow obtaining these features - by way of non-limiting example, by impregnating the coil in resin.

The coils 16a, 16b and 16c occupy substantially the same space in the slot 4b.

In a preferred embodiment, the winding of the stator 1 is three-phase and the coils 16 of each phase are connected in series.

In an embodiment, the electric insulation system 5 comprises insulating vanes 201, disposed at the entrance of the slots 4b. The vanes 201 extend along the axis A and serve to ensure electric insulation between adjacent coils 16. In proximity to the opening of the slot 4b, adjacent coils 16 are very close, owing to the preferred dimensional ratio between the teeth 4a and the slot pitch.

In a preferred embodiment, the face 17 of each coil 16 is plastically deformed to engage the respective tooth 4a and the locking system 10. As illustrated for example in Figure 7, the face 17 is positioned on a respective radial element 8 of the insulation system and is plastically deformed towards the base surface 11.

In practice, once the coil 16 has been fitted to the respective tooth 4a, the face 17 is deformed in such a way as to be at least partly inserted into the recess delimited by the protrusion 12.

Each coil is stationary relative to the insulation system 5, hence relative to the ferromagnetic core 2, since it is locked by the respective protrusion 12. More specifically, the arm 14 stops it from moving radially, while the arms 13 stop it from moving tangentially.

In an embodiment, the insulation system 5 - preferably, the portion 6 thereof - is provided, at each tooth 4a, with a groove 19 where the insulation system does not cover the ferromagnetic core 2.

The groove 19 defines a reference for a tool used to form the coils and place them in the stator.

In an embodiment, the insulation system 5 comprises, for each tooth 4a, a first and a second flank 20, 21, connecting the radial element 8 with the corresponding radial element 9 to form an insulating tube.

In an embodiment, the coils 16 are wound on the respective insulating tube which is then placed over a corresponding tooth 4a.

In use, the stator 1 is inserted in the casing 101.

The casing 101 comprises a side wall 102 and a base wall 103 which define a cup-like structure.

The motor 100 comprises a spacer 104 which is interposed between the stator 1 and the base wall 103.

The spacer 104, which is made of a thermally conductive material, is provided with openings 105 at the coils 16 so that the coil faces 18 can be placed in heat exchange relationship with the casing wall 103, for example by placing a thermally conductive, electrically insulating paste between them. In an embodiment, the openings 105 are in the form of recesses in a radially inner edge and/or in a radially outer edge of the spacer 104.

In an embodiment, in the case of coils 16 wound on a respective tube and then fitted to the tooth 4a, the coils are locked in place when the stator 1 is locked against the base wall 103 of the casing.

In an embodiment, the tube may be fitted to the tooth by a snap-on system, for example, comprising a protrusion on the tooth flank and a recess on the inside of the tube.

A method for assembling a stator 1 comprises a step of winding the coils 16 outside the ferromagnetic core 2.

The method comprises a step of fitting each coil 16 to the respective tooth 4a.

Preferably, the coils have a compact, self-supporting structure so they can be wound outside the stator and then fitted to the tooth.

In an embodiment, the method comprises a step of plastically deforming the face 17 of each coil 16 in such a way that the face 17 is at least partly inserted into the cavity delimited by the protrusion 12.

Preferably, the method comprises a step of holding the coil during the step of plastically deforming it.

The step of fitting each coil 16 to the respective tooth 4a comprises a step of axially and angularly aligning each coil relative to the tooth 4a, for example using the reference grooves 19.

In an embodiment, the method comprises a step of overmoulding the insulation system 5 on the ferromagnetic core 2.

Preferably, the step of overmoulding comprises a step of aligning the ferromagnetic core 2 at a fixed height in a mould, taking the groove 19 as a reference.

That way, any deviations from the axial height of the ferromagnetic core 2 determine a variation in the thickness of the overmoulding in the portion of the insulation system opposite to that where the groove 19 is formed.

In an embodiment, the method comprises a step of winding each coil 16 on a respective tube and a step of fitting the tubes, with the coils 16 on them, to the teeth of the ferromagnetic core 2.

## Claims

1. A stator with concentrated windings, comprising a ferromagnetic core (2) having a central axis (A), an electrical insulation system (5) disposed on the ferromagnetic core (2) and a winding disposed on the insulation system (5) to be electrically insulated from the ferromagnetic core (2), the ferromagnetic core (2) comprising an annular crown (3) and a plurality of teeth (4a) which jut radially from the annular crown (3) towards the central axis (A) and which form a compact structure together with the annular crown (3), each tooth (4a) having a radial length (L1), an axial depth (L2) and a width (L3) orthogonal to the radial length and axial depth, the winding comprising a plurality of coils (16), each positioned on a respective tooth (4a), the insulation system (5) comprising at least a first portion (6) and a second portion (7) disposed on opposite sides of the ferromagnetic core (2) along the central axis (A), the first portion (6) comprising a plurality of first radial elements (8) which, on each tooth (4a), extend from the annular crown (3) towards the central axis (A), the second portion (7) comprising a plurality of second radial elements (9) which, on each tooth (4a), extend from the annular crown (3) towards the central axis (A), the stator being **characterized in that**
the ratio between the slot pitch and the width (L3) of the tooth (4a) is between 1.2 and 1.5, preferably between 1.3 and 1.4, the teeth (4a) being without pole shoe.

2. The stator according to claim 1, wherein at least one tooth (4a) of the plurality of teeth (4a) is rectangular in shape in its cross section orthogonal to the central axis (A).

3. The stator according to claim 1 or 2, wherein the ratio between the width (L3) of the tooth and the axial depth (L2) of at least one tooth (4a) of the plurality of teeth (4a) is between 0.2 and 3, preferably between 0.7 and 1.5.

4. The stator according to claim 3, wherein the ratio between the width (L3) of the tooth and the axial depth (L2) of at least one tooth of the plurality of teeth (4a) is 1.

5. The stator according to any of the preceding claims, wherein all the teeth of the plurality of teeth (4a) are identical.

6. The stator according to any of the preceding claims, wherein the coils (16) are self-supporting.

7. The stator according to any of the preceding claims, wherein the coils (16) are made in a single layer.

8. The stator according to any of the claims from 1 to 6, wherein the coils (16) are made in two or more layers.

9. The stator according to any of the preceding claims, wherein the coils (16) are made from a wire (15) having a substantially rectangular cross section.

10. The stator according to any of the preceding claims, wherein the winding is three-phase and the coils (16) of each phase are connected in series.

11. The stator according to any of the preceding claims, wherein the insulation system (5) is overmoulded on the ferromagnetic core (2).

12. The stator according to claim 11, wherein the ferromagnetic core (2) and the insulation system (5) overmoulded thereon together have, at each radial section, a predetermined total height, measured along the central axis (A), independent of the height of the ferromagnetic core (2) alone at the same radial section.

13. The stator according to claim 11 or 12, wherein the first portion (6) of the insulation system (5) has, at each radial section, a predetermined height, measured along the central axis (A), independent of the height of the ferromagnetic core (2) alone.

14. The stator according to any of the preceding claims, wherein the insulation system (5) is thermally conductive.

15. The stator according to any of the preceding claims, wherein the first radial elements (8) each comprise a base surface (11) and at least one protrusion (12) extending axially from the base surface (11).

16. The stator according to claim 15, wherein the protrusion (12) comprises at least a first arm (13) which extends radially for at least part of the radial length (L1) of the tooth (4a).

17. The stator according to claim 15 or 16, wherein the protrusion (12) comprises a second arm (14) which extends in parallel with the width (L3) of the tooth (4a).

18. The stator according to any of the claims from 15 to 17, wherein each coil (16) comprises a first face (17) which is positioned on a respective first radial element (8) of the insulation system (5), the first face (17) being plastically deformed towards the base surface (11) so that each coil (16) is stationary relative to the insulation system (5), since it is locked at least by the respective protrusion (12).

19. The stator according to any of the preceding claims, wherein the insulation system (5) comprises, for each tooth (4a), a first and a second flank (20, 21), connecting the first radial element (8) with the corresponding second radial element (9) to form an insulating tube.

20. The stator according to any of the preceding claims, wherein the insulation system (5) - preferably, the first portion (6) thereof - is provided, at each tooth (4a), with a groove (19) where the ferromagnetic core (2) is uncovered.

21. An electric motor comprising:
a casing (101) having a base wall (103) and a side wall (102);
a stator (1) mounted in the casing (101) and connected thereto;
a rotor mounted in the casing and rotatably connected thereto;
a lid for closing the casing (101) to define an enclosure;
a thermally conductive and electrically insulating spacer (104) interposed between the stator (1) and the base wall (103) of the casing, the electric motor being **characterized in that** the stator (1) is made according to any one of the preceding claims and the coils (16) are at least partly abutted against the spacer (104) at a predetermined distance from the base wall, the spacer being provided with a plurality of openings (105), each at a respective coil (16), the coils (16) each having a second face (18) orthogonal to the main axis (A), substantially entirely confronting a respective opening of the openings (105) and placed in a heat exchanging relationship with the base wall (103) by interposing a thermally conductive,
electrically insulating material placed in the openings (105).

22. A method for assembling a stator according to any of the claims from 1 to 20, the method comprising a step of winding the coils (16) outside the ferromagnetic core (2) and a step of fitting each coil (16) to a respective tooth (4a), the coils (16) being self-supporting.

23. The assembling method according to claim 22, comprising a step of plastically deforming a first face (17) of the coils (16), the first face (17) being positioned on a respective first radial element (8) of the insulation system (5).
